# EUROPEAN PATENT SPECIFICATION

(11) **EP 1 994 136 B1**
(45) Date of publication and mention of the grant of the patent: **10.05.2017**
(21) Application number: 07726644.3
(22) Date of filing: 06.03.2007
(51) Int. Cl.: C12C 5/00, C12C 7/04

(54) **BEER-BREWING METHOD**
BIERBRAUVERFAHREN
MÉTHODE DE BRASSAGE DE BIÈRE

(30) Priority: 07.03.2006 US 780098 P
(43) Date of publication of application: 26.11.2008
(73) Proprietor: Novozymes A/S, 2880 Bagsvaerd (DK)
(72) Inventor: FESTERSEN, Rikke, M., DK-2730 Herlev (DK); ELVIG, Niels, DK-2840 Holte (DK); BISGAARD-FRANTZEN, Henrik, DK-2880 Bagsvaerd (DK)
(86) International application number: PCT/EP2007/052076
(87) International publication number: WO 2007/101846

(56) References cited:
- EP-A- 1 122 303
- WO-A-00/30478
- WO-A-95/21240
- GB-A- 2 167 313
- US-A- 6 022 721
- US-A1- 2002 015 770
- DATABASE WPI Week 200149 Derwent Publications Ltd., London, GB; AN 2001-452216 XP002436425 & CN 1 294 184 A (WANG S) 9 May 2001 (2001-05-09)

## Description

### FIELD OF THE INVENTION

The present invention relates to a method for beer-brewing comprising adding a catalase composition without, or essentially without glucose oxidase so as to improve the flavor and/or flavor stability of the finished beer.

### BACKGROUND

It is known to apply enzyme compositions comprising catalase and glucose oxidase in brewing processes in order to improve the flavor stability of the beer. However, the results obtained with catalase - glucose oxidase compositions have not been entirely successful and it has been suggested that glucose oxidase and sulfite could be an attractive alternative (Blockmans et al. ASBC Journal 1987, vol. 45, 85-90). There is thus a need for further methods for improving flavor stability of beer.

### SUMMARY OF THE INVENTION

The present inventors have now discovered that the effect of the enzyme treatment can be greatly improved by applying a catalase composition without glucose oxidase. Accordingly, the invention provides a method for producing a beer, comprising adding a catalase composition to the mash so as to improve the flavor and/or flavor stability of the finished beer, said catalase composition having a ratio of glucose oxidase activity to catalase activity GODU/CIU less than 0.001, and wherein the catalase is added to the mash in the amount of 100 CIU to 0.1 mill CIU/kg mash.

### DETAILED DESCRIPTION OF THE INVENTION

The process of beer-brewing is well known to the person skilled in the art. A conventional procedure may be outlined in the following way: The starting material is malted (i.e. dampened, germinated and subsequently dried) barley and/or unmalted adjuncts, called the grist. During the mashing, where the grist is grounded and mixed with water, heated and stirred, the carbohydrates are degraded to fermentable sugars by the aid of the enzymes naturally present in the malt. After mashing, it is necessary to separate the liquid extract (the wort) from the solids (spent grain particles and adjuncts) in order to get clear wort. Wort filtration is important because the solids contain large amounts of protein, poorly modified starch, fatty material, silicates, and polyphenols (tannins) and proteins. After addition of hops, the wort is boiled. Hereby a precipitation of polyphenols will take place. After cooling and removal of precipitates, the finished beer wort (a) is aerated and yeast is added. After a main fermentation, lasting typically 5-10 days, most of the yeast is removed and the so called green beer (b) is stored at a low temperature, typically at 0 - 5°C for one to 12 weeks. During this period the remaining yeast will precipitate together with polyphenols. To remove the remaining excess polyphenols a filtration is performed. The fermented beer (c) may now bee carbonized prior to bottling. Carbon dioxide not only contributes to perceived "fullness" or "body" and as a flavor enhancer, it also acts as to enhances foaming potential and plays an important role in extending the shelf life of the product.

Without being bound by theory it is believed that oxidation processes during malting and mashing are the main cause for off-flavors and flavor instability in the bottled beer. The most important oxidation products are DMS (Dimethyl sulfide), Trans-2-nonenal (T2N). DMS and T2N are important off-flavors in beer. The cause of oxidation and the formation of activated oxygen are due to lipoxygenase formed during the malting process and non-enzymatic oxidation from reactive Copper (Cu+) and iron, a mechanisms which lead to the formation of free radicals and hydrogen peroxide. Native malt catalase reduces the level of oxygen radicals in the malt. However the native catalase is easily inactivated during malting and the initial mashing step. Application of catalase to brewing processes is well known in the art (EP1122303). However, prior art applications comprise use of enzyme compositions comprising catalase as well as glucose oxidase. By using enzyme compositions comprising catalase without, or essentially without glucose oxidase an increased positive effect on flavor and/or flavor stability is achieved. Without being bound by theory it is believed that the increase in effect on flavor stability attained by the process of the present invention may be explained by the reduced amount of oxidation products due to H₂O₂ formed by the glucose oxidase.

In the context of the present invention the term "essentially without glucose oxidase" is understood that the ratio of glucose oxidase activity to catalase activity GODU/CIU in enzyme composition is less than 0.001, preferably less than 0.0001, and most preferably less than 0.00001. Preferably the glucose oxidase activity is below the detection level.

According to the invention an enzyme composition comprising a catalase is added during the brewing process. The enzyme composition should comprising no, or essentially no glucose oxidase. The enzyme composition comprising catalase may be added at any step during the process, e.g. to the mash, the beer wort, the green beer, and/or the fermented beer. Preferably the enzyme composition comprising catalase is added prior to and/or during the mashing step. The enzyme composition comprising catalase is added to the mixture of grist and water, the mash. The catalase may be added in the amount of 0.02-200 mg enzyme protein (EP)/kg mash, preferably 0.2-20 mg enzyme protein (EP)/kg mash, more preferably 1-10 mg enzyme protein (EP)/kg mash. The catalase is added in the amount of 100 CIU to 0.1 mill CIU/kg mash.2

Preferably the catalase is a microbial catalase, such as a catalase isolated from a fungi or a bacterium. Preferably the catalase is derived from a strain of *Scytalidium* sp., preferably S*.thermophilum,* a strain of *Aspergillus* sp., preferably A. *niger,* a strain of *Micrococcus* sp., preferably *M*. *luteus.*

Preferably the enzyme composition comprising catalase without, or essentially without glucose oxidase is a mono component composition resulting from purification of an enzyme composition derived from a non-recombinant production strain. Methods for purification of polypeptides including enzymes are well known to the skilled person.

More preferably the enzyme composition comprising catalase is produced by recombinant techniques. By recombinant techniques an enzyme composition comprising essentially pure catalase, such as a composition without, or essentially without glucose oxidase may be obtained. Methods for recombinant production of polypeptides including enzymes are well known to the skilled person.

Preferred commercial enzyme composition produced by recombinant techniques are available as Terminox Ultra™ from Novozymes A/S and as Fercolase from Genencor Int. A preferred commercial mono component enzyme composition derived from *Aspergillus niger* is available as Catazyme from Novozymes A/S.

In a preferred embodiment the enzyme composition also comprises a laccase.

The beer produced by the processes of the invention may be any type of beer. Preferred beer types comprise ales, strong ales, stouts, porters, lagers, bitters, export beers, malt liquors, happoushu, high-alcohol beer, low-alcohol beer, low-calorie beer or light beer.

The processes may include adding silica hydrogel, kieselguhr and/or polyvinylpoly-pyrrolidone (PVPP) to the fermented wort and filtering to render the beer bright.

The catalase applied during the processes of the present invention have a reducing effect on the concentration of important off-flavor coursing compounds. Preferably the concentration of DMS of the wort and/or the beer is reduced, compared to the level in a wort or beer produced by a conventional mashing procedure, such as by at least 10%, at least 20%, at least 30%, at least 40%, at least 50%, or at least 60% relative to the level in respectively a wort or beer produced by standard Congress mashing procedure. Preferably the concentration of T2N of the wort or the beer is reduced, compared to the level in respectively a wort or a beer produced by a conventional procedure, such as reduced by at least 10%, at least 20%, at least 30%, at least 40%, at least 50%, or at least 60%.

### Catalase activity

Catalase activity may be measured in CIU. Catalase catalyzes the first order reaction:

2H₂O₂ → 2H₂O + O₂

The degradation of hydrogen peroxide is monitored using spectrophotometry at 240 nm. The time taken for a specified decrease in absorbance at a specified H₂O₂ concentration is an expression of catalase activity. One CIU is defined as the enzyme activity that will degrade one µM H₂O₂ per minute at pH 7.0 and 25°C, reducing the H₂O₂ concentration from 10.3 to 9.2 mM.

### Reaction conditions:

| | |
|---|---|
| Enzyme concentration | approx. 100 CIU/mL |
| Substrate concentration | 10.3 mM H₂O₂ |
| Buffer | 50 mM phosphate |
| Temperature | 25°C |
| pH | 7.0 |

### Detection:

| | |
|---|---|
| Wavelength | 240 nm |
| Absorbance range | 0.450 - 0.400 |
| Time range | 0.267-0.400 minutes (16-24 seconds) |

A detailed description of the CIU standard method (EB-SM-0250.02/01) is available upon request from Novozymes A/S

### Glucose-oxidase activity

Glucose-oxidase Unit (GODU) is the amount of enzyme, which oxidizes 1 µmol of beta-D-Glucose per minute. Glucose-oxidase (beta -D-glucose: oxygen-1-oxido-reductase, EC 1.1.3.4.) oxidises beta -D-glucose in the presence of oxygen to delta-glucono-lactone and hydrogen-peroxide. The generated hydrogen-peroxide oxidises ABTS-R (2, 2-Azino-di-(3-ethylbenzthiazoline)-6-sulfonate) in the presence of peroxidase (POD). This generates a green-blue colour, which is measured photometrically at 405 nm.

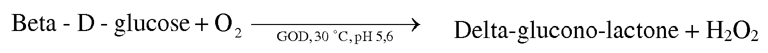

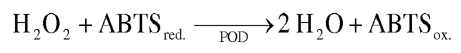

### Reaction conditions

| | |
|---|---|
| Substrate | Glucose 90 mM (16.2 g/L) |
| ABTS | 1.25 mM (688 mg/L) |
| Glucose-oxidase | 0.0061-0.0336 GODU/mL |
| Peroxidase (POD) | 2930 U/L |
| Buffer | Acetate, 100 mM |
| pH | 5.60 ± 0.05 |
| Temperature | 30 °C ± 1 |
| Reaction time | 36 sec. (8 x 4.5 sec.) |
| Wavelength | 405 nm |

A detailed description of the GODU standard method (EB-SM-0244.02) is available upon request from Novozymes A/S

### MATERIAL and METHODS

### Electron spin resonance (ESR) spectroscopy

For the prognosis of beer flavour stability electron spin resonance (ESR) spectroscopy has been used for several years now, for determining the so-called lag time of a beer via accelerated beer ageing at raised tem-peratures (60 °C). The lag time value determined by this method is seen as a criterion for the endogenous anti-oxidative potential of a beer, which is primarily based on the reducing compounds (e.g. SO2, ascorbic acid), and itself is directly linked to the oxidative beer stability.

The lag time measurement by ESR spectroscopy bases on the indirect detection of the radical generation in beer during the accelerated beer ageing. The formed short-lived reactive radicals can be monitored by trapping with spin traps and the detection of the long-lived spin adducts using ESR spectroscopy.

For a certain period of time, the radical generation can be delayed or prevented by the endogenous anti-oxidative activity of beer (lag phase). After the lag phase the amount of radical begins to increase rapidly with time.

Endogenous Antioxidant Potential (EAP) is the beer sample's natural ability to quench radicals formed when heated to 63°C and exposed atmospheric oxygen. The longer the lag phase in the ESR signal is, the higher the EAP is in the beer. After this point of view radicals will be formed naturally in the beer. In order to compare different beers, the total ESR (T₃₀₀₋₇₀₀) signal at a given time is equivalent to the amount of radicals being formed at a certain time point still at 63°C and exposed to atmospheric air. The lower the signal the less radicals are being formed in the beer sample.

Beverage Antioxidant Index (BAX) defined as BAX(sp) = EAP-value/ ΔSO₂-content [min* I / mg] measures the influence of spiked SO₂ to the beer, and the interaction with the natural antioxidants present in the beer.

High EAP as well as high BAX is correlated to better beer storage stability (Uchida et al. 1996, J.Am.Brew.Chem. 54 205-211, Andersen et al. 1998. J. Agric. Food Chem. 1998, Vol 46, pp.1272-1275, Andersen et. al. 2000. J. Agric. Food Chem. 2000, Vol 48, pp.3106-3111).

### Example 1

A beer wort was produced from a grist comprising 35% malt (Esperanza Riego), unmalted barley 15% and 50% maize grits. The grist was mashed with 0 ppm catalase (control), 2 ppm catalase (as mg/kg DS) and 10 ppm control. The catalase was a highly purified catalase from *Aspergillus niger* having an activity of 132000 CIU/ml and no detectable glucose oxidase activity. The wort was fermented with brewer's yeast to a lager beer. In the transfer from fermentation rest the following additives were added to the green beer; 34 gr/HI of Britesorb and 2 gr/HI of sodium eritorbate.

Wort and beer were analyzed; the results are shown in table 1 and 2.

**Table 1. Analysis of wort from grist mashed with 0 ppm catalase (control), 2 ppm catalase (as mg/kg DS) and 10 ppm control.**

| | 0 ppm | 2 ppm | 10 ppm |
|---|---|---|---|
| color (° SRM) before boiling | 2.1 | 1.89 | 1.92 |
| color (° SRM) after boiling | 3.3 | 3.1 | 3.16 |
| turbidity before boiling at 60 °C | 258 | 198 | 215 |
| turbidity after boiling at 60 °C | 205 | 160 | 142 |
| TBI, after cooling the wort | 56 | 56.8 | 58.6 |
| Redox: tanometer | 59.11 | 53.47 | 52.25 |
| pH | 5.28 | 5.25 | 5.24 |
| ° Plato, % | 17.03 | 16.83 | 16.93 |
| bitterness | 32.8 | 32.5 | 32.4 |
| ITT, seconds | 320 | 277 | 237 |
| Windish test | (-) | (-) | (-) |

**Table 2. Analysis of beer from grist mashed with 0 ppm catalase (control), 2 ppm catalase (as mg/kg DS) and 10 ppm control.**

| | 0 ppm | 2 ppm | 10 ppm |
|---|---|---|---|
| pH | 4.15 | 4.1 | 4.1 |
| color, ° SRM | 3.3 | 3.3 | 3.3 |
| bitterness unit | 15.7 | 16.2 | 16.2 |
| alcohol, %P | 3.39 | 3.5 | 3.52 |
| real extract, % | 3.92 | 4.02 | 3.95 |
| calculated original extract | 10.7 | 10.9 | 10.8 |
| apparent extract, % | 2.4 | 2.46 | 2.38 |
| turbidity (°ASBC) | 26 | 26 | 25 |
| foam, sigma value | 111 | 107 | 109 |
| free SO2, mg/l | 1.25 | 1.25 | 1.41 |
| total SO2, mg/l | 6.6 | 6.18 | 6.85 |
| dissolved oxygen (ppb) | 185 | 192 | 177 |
| carbon dioxide, % weight | 0.505 | 0.48 | 0.52 |

The beer was subjected to sensorial analysis performed by a trained taste panel. The procedure for the forced stability test was the following: 24 hours under agitation and 3 days at 38 ° C. The scale for the flavor stability goes from 1 to 7. 1 indicates no taste of oxidation and 7 is a beer with high degree of oxidation. The results are shown in table 3.

**Table 3. Flavor stability. The scale for the flavor stability goes from 1 to 7, where the value 1 indicates no taste of oxidation and 7 indicates a high degree of oxidation.**

| | Fresh | Forced | 30 days | 60 days | 90 days | 120 days |
|---|---|---|---|---|---|---|
| Control | 2.55 | 3.16 | 3.58 | 3.40 | 4.08 | 4.87 |
| 2 ppm | 2.54 | 3.00 | 2.91 | 3.10 | 3.60 | 4.75 |
| 10 ppm | 2.4 | 2.83 | 2.91 | 3.00 | 3.40 | 3.56 |

### Example 2

A classic German pilsner type beer was brewed using 100% barley pilsner malt. Enzymes were added during the mashing step followed by wort boiling, maturation and bottling. The enzymes used was an *A. niger* catalase composition comprising glucose oxidase side activity (Catazyme®), and a *Scytalidium thermophilum* catalase composition without glucose oxidase side activity (Terminox Ultra ®).

The bottled beer was stored at 20 °C and analysed after 4 and 12 weeks.

| Table 4. Endogenous Antioxidant Potential (minutes) and total ESR (total signal) after 4 weeks storage and after 12 weeks storage at 20°C. | | | | |
|---|---|---|---|---|
| | After 4 weeks | | After 12 weeks | |
| | EAP | ESR T₇₀₀ | EAP | ESR T₃₀₀ |
| Control no enzyme | 184 | 2,75*10⁵ | 131 | 3,2*10⁵ |
| 1325 CIU/kg *A. niger* catalase w. GOX¹ | 205 | 2,25*10⁵ | 135 | 3,6*10⁵ |
| 1320 CIU/kg *S*. *thermophilum* Catalase wo. GOX² | 222 | 1,8*10⁵ | 176 | 2,5*10⁵ |

| | | | | |
|---|---|---|---|---|
| 1: Contains 3870 GODU/g (Glucose oxidase units); 2: Level below detection level of 1,5 GODU/g | | | | |

### Example 3

A pilsner type beer was brewed using barley pilsner malt and corn starch adjunct. Enzymes were added during the mashing step followed by wort boiling, maturation and bottling. The enzymes used was an *A. niger* catalase composition comprising glucose oxidase side activity (Catazyme®), a purified sample of the A. *niger* catalase composition without glucose oxidase side activity, and a *Scytalidium thermophilum* catalase composition without glucose oxidase side activity (Terminox Ultra ®).

The bottled beer was stored at 20 °C and analysed 120 days.

| Table 5. Beverage Antioxidant Index (min*I/mg SO2) and total ESR (total signal) after 120 days storage at 20°C. | | |
|---|---|---|
| | 120 days old beers | |
| | BAX | ESR T₃₀₀ |
| Control no enzyme | 28,9 | 7,0*10⁵ |
| 1325 CIU/kg *A. niger* Catalase w. GOX¹ | 29,5 | 8,1*10⁵ |
| 1320 CIU/kg *A. niger* Catalase wo. GOX² | 71,9 | 2,8*10⁵ |
| 1320 CIU/kg *S. thermophilum* Catalase wo. GOX³ | 42,6 | 5,0*10⁵ |

| | | |
|---|---|---|
| 1: Contains 3870 GODU/g (Glucose oxidase units); 2: Level below detection level of 1,5 GODU/g; 3: Level below detection level of 1,5 GODU/g | | |

## Claims

1. A method for producing a beer, comprising adding a catalase composition to the mash so as to improve the flavor and/or flavor stability of the finished beer, said catalase composition having a ratio of glucose oxidase activity to catalase activity GODU/CIU less than 0.001, and wherein the catalase is added to the mash in the amount of 100 CIU to 0.1 mill CIU/kg mash.

2. The method according to claim 1, wherein the catalase is a microbial catalase, derivable from a bacterium or a fungus.

3. The method according to claim 2, wherein the microbial catalase is derivable from a fungus belonging to *Scytalidium* sp., *Aspergillus* sp. or *Micrococcus* sp.

4. The method according to claim 3, wherein the microbial catalase is derivable from *S*. *thermophilum, A. niger* or *M*. *luteus.*

5. The method according to claim 1, wherein the catalase is produced by recombinant techniques.

6. The method according to claim 3, wherein the enzyme composition further comprises a laccase.

## Patentansprüche

1. Verfahren zum Herstellen eines Biers, umfassend Zugeben einer Katalasezusammensetzung zu der Maische, um das Aroma und/oder die Aromastabilität des fertigen Biers zu verbessern, wobei die Katalasezusammensetzung ein Verhältnis von Glucoseoxidaseaktivität zu Katalaseaktivität GODU/CIU von kleiner als 0,001 aufweist und wobei die Katalase in einer Menge von 100 CIU bis 0,1 mill CIU/kg Maische zu der Maische zugegeben wird.

2. Verfahren gemäß Anspruch 1, wobei die Katalase eine mikrobielle Katalase ist, die von einem Bakterium oder einem Pilz ableitbar ist.

3. Verfahren gemäß Anspruch 2, wobei die mikrobielle Katalase von einem Pilz ableitbar ist, der zu *Scytalidium* sp., *Aspergillus* sp. oder *Micrococcus* sp. gehört.

4. Verfahren gemäß Anspruch 3, wobei die mikrobielle Katalase von *S. thermophilum, A. niger* oder *M. luteus* ableitbar ist.

5. Verfahren gemäß Anspruch 1, wobei die Katalase durch rekombinante Verfahren hergestellt ist.

6. Verfahren gemäß Anspruch 3, wobei die Enzymzusammensetzung ferner eine Laccase umfasst.

## Revendications

1. Procédé de production d'une bière, comprenant l'ajout d'une composition de catalase au moût de manière à améliorer l'arôme et/ou la stabilité de l'arôme de la bière finale, ladite composition de catalase ayant un rapport de l'activité glucose oxydase à l'activité catalase GODU/CIU inférieur à 0,001, et dans lequel la catalase est ajoutée au moût en une quantité de 100 CIU à 0,1 mill CIU/kg de moût.

2. Procédé selon la revendication 1, dans lequel la catalase est une catalase microbienne, pouvant être dérivée d'une bactérie ou un champignon.

3. Procédé selon la revendication 2, dans lequel la catalase peut être dérivée d'un champignon appartenant à *Scytalidium* sp., *Aspergillus* sp. ou *Micrococcus* sp.

4. Procédé selon la revendication 3, dans lequel la catalase microbienne peut être dérivée de *S*. *thermophilum, A. niger* ou *M*. *luteus.*

5. Procédé selon la revendication 1, dans lequel la catalase est produite par des techniques recombinantes.

6. Procédé selon la revendication 3, dans lequel la composition d'enzyme comprend en outre une laccase.
